# EUROPÄISCHE PATENTSCHRIFT

(11) **EP 0 679 125 B1**
(45) Veröffentlichungstag und Bekanntmachung des Hinweises auf die Patenterteilung: **23.04.1997**
(21) Anmeldenummer: 94903881.4
(22) Anmeldetag: 29.12.1993
(51) Int. Cl.: B60B 17/02, B60B 17/00

(54) **GUMMIGEFEDERTES SCHIENENRAD**
RAIL WHEEL WITH RESILIENT ELEMENTS
ROUE POUR RAIL POURVUE D'ELEMENTS ELASTIQUES

(30) Priorität: 12.01.1993 DE 4300553
(43) Veröffentlichungstag der Anmeldung: 02.11.1995
(73) Patentinhaber: Ortwein, Hermann, 51588 Nümbrecht (DE)
(72) Erfinder: Ortwein, Hermann, 51588 Nümbrecht (DE)
(74) Vertreter: Happe, Otto, Dipl.-Ing.
(86) Internationale Anmeldenummer: EP9303710
(87) Internationale Veröffentlichungsnummer: WO9415801

(56) Entgegenhaltungen:
- EP-A- 0 489 455
- DE-B- 1 225 921
- FR-A- 1 126 819
- GB-A- 2 153 308

## Beschreibung

Die Erfindung betrifft ein gummigefedertes Schienenrad, das einen mit einem Spurkranz versehenen Radreifen und eine Felge aufweist, wobei die Felge mehrteilig ausgebildet ist und zwischen den Teilen der Felge mindestens zwei vorgespannte scheibenförmige Gummiplatten vorgesehen sind, die zumindest über die Hälfte ihres Querschnitts einen Winkel einschließen, der größer als 5° und kleiner als 45° ist.

Bei bekannten gummigefederten Schienenrädern der vorgenannten Art sind zwei Gummiplatten parallel zueinander angeordnet (DE-PS 19 57 382, DE-PS 21 42 774). Hierbei stehen die Gummiplatten durch die durch Schrauben aufgebrachte Vorspannung unter einer Druckbeanspruchung, werden aber im übrigen fast ausschließlich auf Schub beansprucht, so daß sich unzulässig große Federwege ergeben.

Bei einem anderen bekannten gummigefederten Schienenrad, bei dem in der Felge eine aus mehreren vorgespannten Gummikörpern gebildete ringförmige Einlage vorgesehen ist, wird der Gummikörper in vertikaler Richtung ausschließlich auf Druck und in horizontaler Richtung ausschließlich auf Schub beansprucht (DE-PS 33 28 321). Dadurch sind die Federwege in vertikaler Richtung sehr gering, während in horizontaler Richtung, in der eine Einfederung nicht erwünscht ist, sich große Federwege ergeben.

Bei einem weiteren bekannten gummigefederten Schienenrad schließen die Felgen einen Winkel ein (FR-PS 1 126 819). Bei diesem Schienenrad, bei dem die scheibenförmigen Gummiplatten auf Schub und Druck beansprucht werden, sind die Schwingungen im Schienenfahrzeug und damit der Verschleiß an Rad und Schiene reduziert.

Der Erfindung liegt die Aufgabe zugrunde, die vorgenannten gummigefederten Schienenräder zu verbessern, wobei die nicht abgefederten Massen des Schienenfahrzeugs so gering wie möglich gehalten werden und darüber hinaus das unangenehme Kurvenquietschen des Schienenfahrzeugs vermieden wird.

Die Lösung der gestellten Aufgabe besteht darin, daß die Gummiplatten aus einem Gummi mit einer Härte von etwa 48 bis 60 Shore gebildet sind, wobei die Setzung nicht mehr als 12 % beträgt. Hierdurch wird das Verhältnis der dynamischen zur statischen Steifigkeit des Gummis (K_{dyn} zu Kₛₜₐₜ) positiv beeinflußt. Dieses Verhältnis bestimmt - in Verbindung mit der Einfederung - den Grad der Vibrationsdämpfung im Rad und damit auch die Abstrahlung der Geräusche. Darüber hinaus ermöglicht die erfindungsgemäße Ausgestaltung der Erfindung eine starke Vorspannung der Gummiplatten, wobei die vertikale Einfederung im gewünschten Maße erhalten bleibt und die horizontale Einfederung nahezu den Wert Null aufweist.

Bei der geringen möglichen Einfederung des Schienenrades sollte das vorgenannte Verhältnis K_{dyn} zu Kₛₜₐₜ nicht größer als 1,8 sein. Für die Gummiplatten ist daher ein entsprechender Gummi zu wählen. Vorzugsweise bestehen die Gummiplatten aus einem Gummi auf Naturkautschukbasis.

In Weiterbildung der Erfindung sind zwei Paare vorgespannter scheibenförmiger Gummiplatten nebeneinander angeordnet. Diese Ausführungsform eignet sich insbesondere für solche Schienenräder, deren Felge mit Einbauten versehen ist, so daß nur eine verhältnismäßig geringe Bauhöhe zur Verfügung steht.

Bei einer anderen Ausführungsform des erfindungsgemäßen Schienenrades schließen diejenigen Bereiche des Querschnitts der Gummiplatten, die der Achse des Schienenrades abgewandt sind, einen Winkel ein, dessen Spitze zum Radreifen des Schienenrades weist, wobei dieser Winkel etwa dem Winkel entspricht, den diejenigen Bereiche des Querschnitts der Gummiplatten bilden, die der Achse des Schienenrades zugewandt sind.

Das erfindungsgemäße gummigefederte Schienenrad kann noch dadurch verbessert werden, daß die scheibenförmigen Gummiplatten in der Weise mehrteilig ausgebildet sind, daß jeweils mindestens zwei scheibenförmige Gummiplatten konzentrisch zueinander angeordnet sind. Dies erlaubt eine sehr hohe Vorspannung der scheibenförmigen Gummiplatten.

Eine weitere Verbesserung des erfindungsgemäßen gummigefederten Schienenrades wird dadurch erzielt, daß der Querschnitt der Gummiplatten sowie die daran angrenzenden Flächen der Felge gewölbt ausgebildet sind.

Zweckmäßigerweise ist der Querschnitt der Gummiplatten im ungespannten Zustand derart konisch ausgebildet ist, daß der Querschnitt der Gummiplatten zur Achse des Schienenrades hin zunimmt. Dadurch wird ein Ansteigen der Vorspannung der Gummiplatten zur Achse des Schienenrades hin bewirkt.

Um in jedem Falle eine Berührung zwischen den sich gegeneinander zu bewegenden Teilen der Felge zu vermeiden, ist nach einem weiteren Merkmal der Erfindung zumindest an einem der sich gegeneinander zu bewegenden Teile der Felge ein Anschlag aus elastischem Werkstoff vorgesehen.

Bei einer bevorzugten Ausführungsform der Erfindung ist die Größe der Einfederung des Schienenrades in vertikaler und in horizontaler Richtung durch entsprechende Abstimmung des Maßes der Vorspannung der Gummiplatten und der Größe des von den Gummiplatten eingeschlossenen Winkels bestimmt, so daß die Härte des die Gummiplatten bildenden Gummis weitgehend frei bestimmt werden kann.

Die Erfindung ist anhand der Zeichnung näher erläutert. Es zeigen:
- Fig. 1: einen Querschnitt durch die untere Hälfte eines gummigefederten Schienenrades;
- Fig. 2: die Querschnittsfläche des unteren Bereichs einer Gummiplatte;
- Fig. 3: die Querschnittsfläche des unteren Bereichs einer mehrteiligen Gummiplatte;
- Fig. 4: einen Querschnitt durch die untere Hälfte eines zweiten gummigefederten Schienenrades;
- Fig. 5: einen Querschnitt durch den unteren Bereich eines dritten gummigefederten Schienenrades;
- Fig. 6: einen Querschnitt durch den unteren Bereich eines vierten gummigefederten Schienenrades.

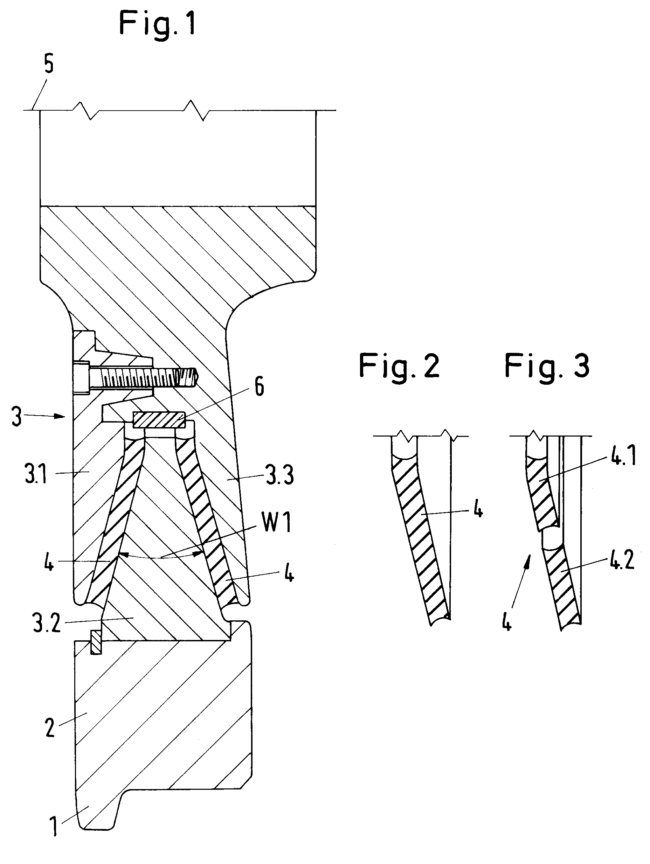

Das in Fig. 1 dargestellte gummigefederte Schienenrad besteht aus einem mit einem Spurkranz 1 versehenen Radreifen 2 und einer Felge 3. Zwischen den Teilen 3.1, 3.2 und 3.3 der Felge 3 sind zwei vorgespannte scheibenförmige Gummiplatten 4 vorgesehen, die über einen wesentlichen Bereich ihres Querschnitts einen Winkel W1 einschließen, wobei die Spitze des Winkels W1 zur Achse 5 des Schienenrades weist. An dem Teil 3.3 der Felge 3 ist ein Anschlag 6 aus elastischem Werkstoff vorgesehen.

Wie aus Fig. 2 zu ersehen ist, kann der Querschnitt der Gummiplatten 4 im ungespannten Zustand derart konisch ausgebildet sein, daß er zur Achse 5 des Schienenrades hin zunimmt.

Fig. 3 zeigt eine mehrteilige Gummiplatte 4, die durch zwei konzentrisch zueinander angeordnete scheibenförmige Gummiplatten 4.1 und 4.2 gebildet ist.

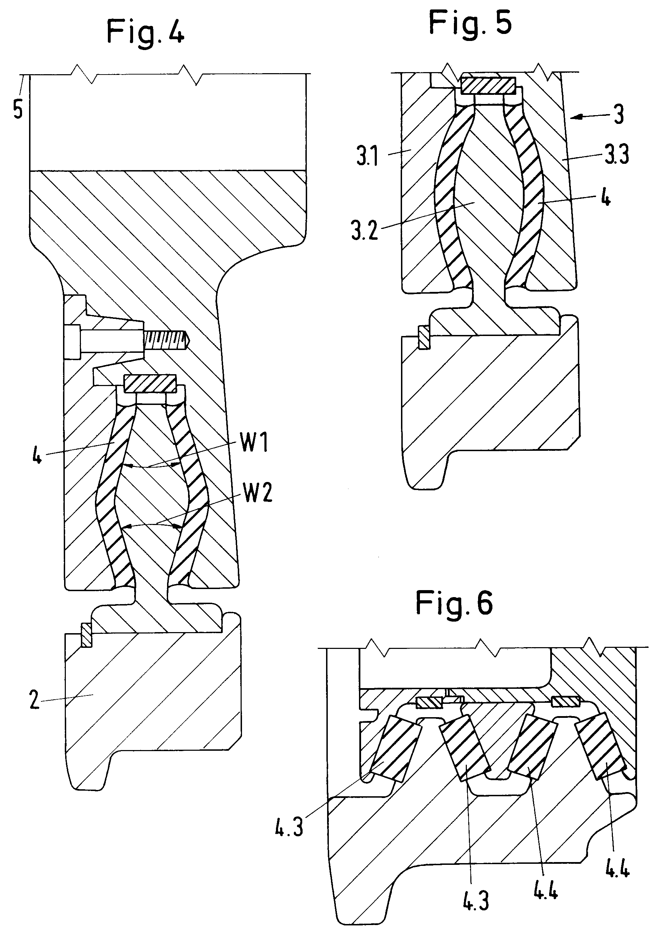

Bei dem in Fig. 4 dargestellten Ausführungsbeispiel eines gummigefederten Schienenrades schließen diejenigen Bereiche des Querschnitts der Gummiplatten 4, die der Achse 5 des Schienenrades zugewandt sind, einen Winkel W1 ein, dessen Spitze zur Achse 5 des Schienenrades weist, während diejenigen Bereiche des Querschnitts der Gummiplatten 4, die der Achse 5 des Schienenrades abgewandt sind, einen Winkel W2 einschließen, dessen Spitze zum Radreifen 2 des Schienenrades weist.

In Fig. 5 ist ein Schienenrad dargestellt, bei dem der Querschnitt der Gummiplatten 4 sowie die daran angrenzenden Flächen der Teile 3.1, 3.2 und 3.3 der Felge 3 gewölbt ausgebildet sind.

Bei allen vorstehend beschriebenen Ausführungsbeispielen können der Radreifen 2 und das Teil 3.2 der Felge 3 auch einstückig ausgebildet sein.

Ein weiteres Ausführungsbeispiel ist in Fig. 6 dargestellt. Bei diesem Ausführungsbeispiel sind zwei Paare vorgespannter scheibenförmiger Gummiplatten 4.3 und 4.4 nebeneinander angeordnet.

## Patentansprüche

1. Gummigefedertes Schienenrad, das einen mit einem Spurkranz (1) versehenen Radreifen (2) und eine Felge (3) aufweist, wobei die Felge (3) mehrteilig ausgebildet ist und zwischen den Teilen (3.1, 3.2, 3.3) der Felge (3) mindestens zwei vorgespannte scheibenförmige Gummiplatten (4) vorgesehen sind, die zumindest über die Hälfte ihres Querschnitts einen Winkel (W1) einschließen, der größer als 5° und kleiner als 45° ist, **dadurch gekennzeichnet**, daß die Gummiplatten (4) aus einem Gummi mit einer Härte von etwa 48 bis 60 Shore gebildet sind.

2. Gummigefedertes Schienenrad nach Anspruch 1, dadurch gekennzeichnet, daß das Verhältnis K_{dyn} zu Kₛₜₐₜ nicht größer als 1,8 ist.

3. Gummigefedertes Schienenrad nach Anspruch 1 oder 2, dadurch gekennzeichnet, daß die Gummiplatten (4) aus einem Gummi auf Naturkautschukbasis bestehen.

4. Gummigefedertes Schienenrad nach Anspruch 1, 2 oder 3, dadurch gekennzeichnet, daß zwei Paare vorgespannter scheibenförmiger Gummiplatten (4.3, 4.4) nebeneinander angeordnet sind.

5. Gummigefedertes Schienenrad nach einem der Ansprüche 1 bis 4, dadurch gekennzeichnet, daß diejenigen Bereiche des Querschnitts der Gummiplatten (4), die der Achse (5) des Schienenrades abgewandt sind, einen Winkel (W2) einschließen, dessen Spitze zum Radreifen (2) des Schienenrades weist, wobei dieser Winkel (W2) etwa dem Winkel (W1) entspricht, den diejenigen Bereiche des Querschnitts der Gummiplatten (4) bilden, die der Achse (5) des Schienenrades zugewandt sind.

6. Gummigefedertes Schienenrad nach einem der Ansprüche 1 bis 5, dadurch gekennzeichnet, daß die scheibenförmigen Gummiplatten (4) in der Weise mehrteilig ausgebildet sind, daß jeweils mindestens zwei scheibenförmige Gummiplatten (4.1, 4.2) konzentrisch zueinander angeordnet sind.

7. Gummigefedertes Schienenrad nach einem der Ansprüche 1 bis 6, dadurch gekennzeichnet, daß der Querschnitt der Gummiplatten (4) sowie die daran angrenzenden Flächen der Felge (3) gewölbt ausgebildet sind.

8. Gummigefedertes Schienenrad nach einem der Ansprüche 1 bis 7, dadurch gekennzeichnet, daß der Querschnitt der Gummiplatten (4) im ungespannten Zustand derart konisch ausgebildet ist, daß der Querschnitt der Gummiplatten (4) zur Achse (5) des Schienenrades hin zunimmt.

9. Gummigefedertes Schienenrad nach einem der Ansprüche 1 bis 8, dadurch gekennzeichnet, daß zumindest an einem der sich gegeneinander zu bewegenden Teile der Felge (3) ein Anschlag (6) aus elastischem Werkstoff vorgesehen ist.

10. Gummigefedertes Schienenrad nach einem der Ansprüche 1 bis 9, dadurch gekennzeichnet, daß die Größe der Einfederung des Schienenrades in vertikaler und in horizontaler Richtung durch entsprechende Abstimmung des Maßes der Vorspannung der Gummiplatten (4) und der Größe des von den Gummiplatten (4) eingeschlossenen Winkels (W1) bestimmt ist.

## Claims

1. Rail wheel with resilient elements showing a wheel tire (2) provided with a wheel flange (1) and a wheel rim (3), with the wheel rim (3) being of multipart design and with an arrangement between the parts (3.1, 3.2 and 3.3) and the wheel rim (3) of at least two prestressed disk-type rubber plates (4) which at least across half of their cross section include an angle (W1) which is larger than 5° and smaller than 45°, characterized by the fact that the rubber plates (4) are made of a rubber material of a hardness of approx. 48 to 60 Shore.

2. Rail wheel with resilient elements as per claim 1, characterized by the fact that the ratio K_{dyn} : Kₛₜₐₜ does not exceed a value of 1.8.

3. Rail wheel with resilient elements as per claim 1 or 2, characterized by the fact that the rubber plates (4) consist of a rubber material based on natural rubber.

4. Rail wheel with resilient elements as per claim 1, 2 or 3, characterized by the fact that two pairs of prestressed disk-type rubber plates (4.3, 4.4) have been arranged side by side.

5. Rail wheel with resilient elements as per one of the claims 1 to 4, characterized by the fact that those areas of the cross section of the rubber plates (4), positioned off from the axle (5) of the rail wheel, include an angle (W2) the vertex of which points towards the wheel tire (2) of the rail wheel with this angle (W2) approximating the angle (W1) which is formed by those areas of the cross section of the rubber plates (4) facing the axle (5) of the rail wheel.

6. Rail wheel with resilient elements as per one of the above claims 1 to 5, characterized by the fact that the disk-type rubber plates (4) are of such multipart design that at least two disk-type rubber plates (4.1, 4.2) each are arranged concentrically to each other.

7. Rail wheel with resilient elements as per one of the above claims 1 to 6, characterized by the fact that the cross section of the rubber plates (4) as well as the adjacent surfaces of the wheel rim (3) are of a curved design.

8. Rail wheel with resilient elements as per one of the above claims 1 to 7, characterized by the fact that the cross section of the rubber plates (4), in unstressed state, is of such conical design that the cross section of the rubber plates (4) increases towards the axle (5) of the rail wheel.

9. Rail wheel with resilient elements as per one of the above claims 1 to 8, characterized by the fact that at least at one of the parts of the wheel rim (3) moving against each other is provided with a limit stop (6) made of elastic material.

10. Rail wheel with resilient elements as per one of the above claims 1 to 9, characterized by the fact that the value of the deflection of the rail wheel in vertical and horizontal direction is defined by the adequate adaptation of the prestressing of the rubber plates (4) and of the size of the angle (W1) between the rubber plates (4).

## Revendications

1. Roue pour rail pourvue d'éléments élastiques, laquelle possède un bandage (2) doté d'un boudin (1) et une jante (3) et dont la jante (3) est à plusieurs parties et dont entre les parties (3.1, 3.2, 3.3) de la jante (3) des plaques en caouchouc (4) précontraintes en forme de disques sont prévues, lesquelles enferment au moins plus que la moitié de leur coupe transversale un angle (W1), plus grand que 5° et moins que 45°, caractérisé par le fait, que les plaques en caoutchouc (4) sont faites d'un caoutchouc d'une dureté d'approximativement 48 à 60 Shore.

2. Roue pour rail pourvue d'éléments élastiques comme la revendication selon 1, caractérisée par le fait, que le rapport K_{dyn} Kₛₜₐₜ ne dépasse pas 1,8.

3. Roue pour rail pourvue d'éléments élastiques comme la revendication selon 1 ou 2, caractérisée par le fait, que les plaques en caoutchouc (4) sont faites d'un caoutchouc à base de caoutchouc naturel.

4. Roue pour rail pourvue d'éléments élastiques comme revendication selon 1, 2 ou 3, caractérisée par le fait, que deux paires de plaques en caoutchouc précontraintes en forme de disques (4.3, 4.4) sont placées l'une à côté de l'autre.

5. Roue pour rail pourvue d'éléments élastiques d'après une des revendications 1 à 4, caractérisée par le fait, que les zones de la coupe transversale des plaques en caoutchouc (4), qui sont opposées à l'axe (5) de la roue pour rail, enferment un angle (W2), dont le point pointe vers le bandage (2) de la roue pour rail, et que l'angle (W2) correspond à peu près à l'angle (W1), lequel est formé par les zones des coupes transversales des plaques en caoutchouc (4), tournées vers l'axe (5) de la roue pour rail..

6. Roue pour rail pourvue d'éléments élastiques selon une des revendications 1 à 5, caractérisée par le fait, que les plaques en caoutchouc (4) en forme de disques sont formées de plusieurs parties de telle manière, que toujours au moins deux plaques en caoutchouc en forme de disque (4.1, 4.2) sont aménagées concentriquement l'une à l'autre.

7. Roue pour rail pourvue d'éléments élastiques selon une des revendications 1 à 6, caractérisée par le fait, que la coupe transversale des plaques en caoutchouc (4), ainsi que la surface des jantes (3) sont bombées.

8. Roue pour rail pourvue d'éléments élastiques selon une des revendications 1 à 7, caractérisée par le fait, que la coupe transversale des plaques en caoutchouc (4) en état non-contraint est tellement conique, que la coupe transversale des plaques en caoutchouc (4) vers l'axe (5) de la roue pour rail s'accroît.

9. Roue pour rail pourvue d'éléments élastiques selon une des revendications 1 à 8, caractériée par le fait, qu'au moins à un des éléments de la jante (3) se mouvant l'un vers l'autre une butée (6) d'une matière élastique est prévue.

10. Roue pour rail pourvue d'éléments élastiques selon une des revendications 1 à 9, caractérisée par le fait, que l'ampleur du rabattement du ressort de la roue pour rail en sens vertical et en sens horizontal est déterminée par une mise au point adéquate de la mesure de la précontrainte des plaques en caoutchouc (4) et la grandeur de l'angle (W1) enfermé par les plaques en caoutchouc (4)
